# FASCICULE DE BREVET EUROPEEN

(11) **EP 0 424 346 B1**
(45) Date de publication et mention de la délivrance du brevet: **02.08.1995**
(21) Numéro de dépôt: 90870182.4
(22) Date de dépôt: 12.10.1990
(51) Int. Cl.: G01K 7/02

(54) **Dispositif pour la mesure continue de la température d'un bain métallique et son procédé d'utilisation**
Vorrichtung zum kontinuierlichen Messen der Temperatur eines Metallbades und deren Anwendungsverfahren
Device for continuously measuring the temperature of a metal bath and its method of use

(30) Priorité: 18.10.1989 BE 8901128
(43) Date de publication de la demande: 24.04.1991
(73) Titulaire: CENTRE DE RECHERCHES METALLURGIQUES CENTRUM VOOR RESEARCH IN DE METALLURGIE Assoc. sans but lucratif Ver, zonder winstoogmerk, B-1040 Bruxelles (BE)
(72) Inventeur: Nyssen, Pierre, B-4030 Grivegnee (BE)
(74) Mandataire: Lacasse, Lucien Emile

(56) Documents cités:
- EP-A- 0 253 546
- US-A- 3 115 781
- US-A- 4 358 953
- US-A- 4 590 326

## Description

La présente invention concerne un dispositif pour la mesure continue de la température d'un bain métallique contenu dans un récipient métallurgique, en particulier d'un bain d'acier liquide dans un convertisseur d'aciérie ou une poche de coulée. Un tel dispositif, conforme au préambule de la revendication 1, est décrit dans le document US-A-3 115 781.

Dans la description qui va suivre, la référence à un bain d'acier en cours d'élaboration dans un convertisseur d'aciérie n'est donnée qu'à titre de simple exemple destiné à illustrer l'invention. Comme on le comprendra, l'invention s'applique également à tout bain de métal en fusion, ferreux ou non ferreux, contenu dans un récipient métallurgique.

On connaît par le brevet BE-A-904 460, un procédé de détermination en continu de la température d'un bain métallique contenu dans un récipient métallurgique. Ce procédé est basé sur la mesure de la température en au moins deux points situés à l'intérieur de la paroi du récipient, conduisant à la détermination de la température de la surface de la paroi qui se trouve en contact avec ce bain.

La présente invention a pour objet de proposer un dispositif permettant la mise en oeuvre de ce procédé de façon simple et fiable, ce dispositif présentant en outre une longue durée de vie.

Le dispositif selon la présente invention est caractérisé en ce qu'il comporte au moins deux moyens de mesure de la température disposés dans ledit bouchon en matière réfractaire à des profondeurs différentes par rapport à ladite face avant dudit bouchon, en ce que chacun desdits moyens de mesure de la température est logé dans une cavité ménagée dans ledit bouchon en matière réfractaire et s'étendant depuis la face arrière dudit bouchon jusqu'à la profondeur respective correspondant audit moyen de mesure de la température, et en ce qu'il comprend un système électronique pour déterminer la température de la face avant dudit bouchon en matière réfractaire à partir des températures mesurées par lesdits moyens de mesure de la température à leur profondeur respective dans ledit bouchon.

Pour fixer les idées, il sera fait référence ci-dessous à un seul bouchon contenant plusieurs moyens de mesure de la température. Il ne sortirait cependant pas du cadre de la présente invention de prévoir plusieurs bouchons de ce type, comportant chacun un ou même plusieurs moyens de mesure de la température.

Au sens de la présente invention, ledit bouchon présente une face d'extrémité, dite "face avant" du bouchon, qui vient en contact avec le bain métallique contenu dans ledit récipient métallurgique. On considère que la température de cette face avant du bouchon réfractaire est constamment égale à la température du bain métallique avec lequel cette face est en contact, la température du bain étant en outre considérée comme homogène. La condition d'homogénéité de la température est d'ailleurs respectée dans le convertisseur et la poche de coulée, en raison de l'agitation du bain de métal dans ces récipients.

De préférence, ladite face avant du bouchon en matériau réfractaire affleure la surface intérieure du garnissage dans lequel le bouchon est inséré; il ne sortirait cependant pas du cadre de l'invention que cette face avant se trouve légèrement en saillie ou en retrait par rapport à cette surface intérieure.

En particulier, la saillie ne doit pas entraîner de risque de bris du bouchon par le bain de métal en mouvement. D'autre part, le retrait ne doit pas donner lieu à la rétention de particules de métal ou de scorie susceptibles d'empêcher un bon contact entre le bain de métal et la face avant du bouchon.

Dans le cadre de l'invention, ledit bouchon réfractaire peut avoir une forme quelconque. Toutefois, il est de préférence cylindrique, de section ronde ou polygonale et en particulier carrée, pour des raisons de facilité de fabrication. Il est en outre avantageusement placé dans un bloc de protection et de maintien, par exemple en béton réfractaire. Le bloc de protection, le bouchon réfractaire et les moyens de mesure de la température peuvent avantageusement constituer une unité de mesure modulaire et interchangeable; à cet effet, il peut être intéressant de prévoir dans le garnissage un tube, de préférence métallique, destiné à recevoir ladite unité de mesure.

Suivant une autre caractéristique de l'invention, ledit bouchon est constitué, à raison d'au moins 50 %, d'un matériau réfractaire présentant une diffusivité thermique élevée.

Le matériau utilisé présentera avantageusement une excellente résistance au choc thermique; il permettra la réalisation d'une ou de plusieurs cavités dans ledit bouchon, par exemple par usinage ou par moulage. Il ne sera pas mouillé par de nombreux métaux en fusion, en particulier la fonte, l'acier, le cuivre et l'aluminium, ni par les scories correspondantes. Il devra de plus être chimiquement inerte, c'est-à-dire ne pas être dissous par les métaux précités en fusion ni par leurs scories respectives.

Les matériaux utilisables dans des conditions économiques comprennent :
- les nitrures, en particulier les nitrures de bore, de zirconium, de silicium ou d'aluminium;
- le borure de zirconium,
- les composés de silicium et d'aluminium appelés sialons.

Egalement suivant une caractéristique de l'invention, lesdits moyens de mesure de la température sont des thermocouples. Ceux-ci sont de préférence reliés à un système électronique qui permet d'enregistrer en continu les températures mesurées par lesdits thermocouples et de calculer, à tout instant désiré, la température du bain métallique en contact avec la face avant du bouchon réfractaire. Les thermocouples peuvent être chemisés, c'est-à-dire logés dans des gaines de protection contre les vibrations.

On peut bien entendu utiliser d'autres moyens de mesure, notamment des fibres optiques, qui captent le spectre de rayonnement émis par le bouchon réfractaire et le transmettent à des pyromètres optiques, situés de préférence à l'extérieur du bouchon réfractaire.

L'invention sera maintenant décrite de manière plus détaillée, à l'aide d'une forme de réalisation préférée illustrée par les dessins annexés, dans lesquels la
- Fig. 1: représente, en élévation et en plan, un bouchon en nitrure de bore, prévu pour recevoir cinq thermocouples; la
- Fig. 2: est une vue en perspective montrant le montage d'un tel bouchon dans un bloc de protection; la
- Fig. 3: montre le bouchon en nitrure de bore et son bloc de protection mis en place par insertion dans un fond de convertisseur d'aciérie; la
- Fig. 4: montre la position de points de mesure situés à trois niveaux différents dans un bouchon réfractaire inséré dans le garnissage d'un fond de convertisseur; et la
- Fig. 5: présente des courbes d'évolution de la température de ces points en fonction du temps.

Ces figures constituent des représentations schématiques, où l'on n'a reproduit que les éléments nécessaires à la compréhension de l'invention. Dans toutes ces figures, des éléments identiques ou analogues sont désignés par les mêmes repères numériques.

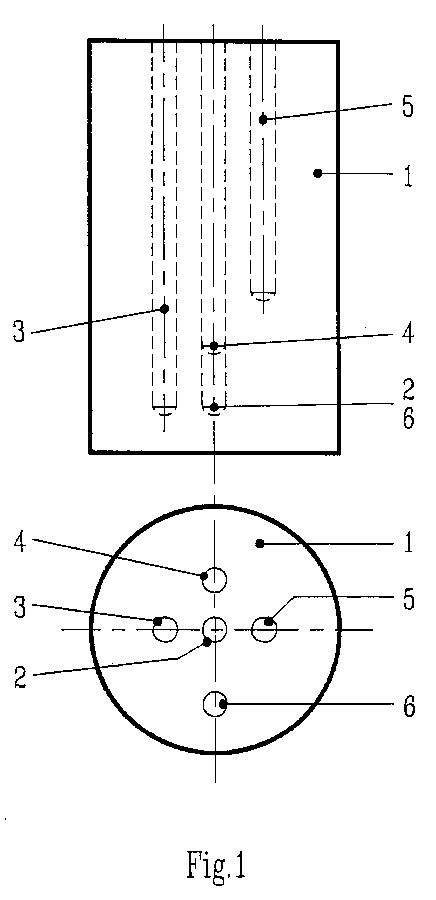

La Fig. 1 représente, en élévation et en plan, un bouchon cylindrique 1, de section circulaire. Dans ce bouchon sont ménagés cinq cavités 2-6, parallèles à l'axe du bouchon, destinés à recevoir cinq thermocouples. Les cavités s'étendent depuis la face dite arrière du bouchon jusqu'à une distance prédéterminée de la face avant du bouchon. Cette distance détermine la profondeur de placement du thermocouple correspondant; en principe, elle est différente pour chaque cavité. Il peut cependant s'avérer intéressant de prévoir au moins une cavité supplémentaire pour une ou plusieurs de ces distances, afin d'augmenter la précision de la mesure de température au niveau correspondant. On peut aussi prévoir deux ou plusieurs bouchons distincts comportant chacun un ou plusieurs thermocouples.

Dans l'exemple représenté, les cavités 2, 3 et 6 se terminent à environ 5 mm de la face avant du bouchon, et les cavités 4 et 5 se terminent respectivement à environ 20 mm et 30 mm de cette face.

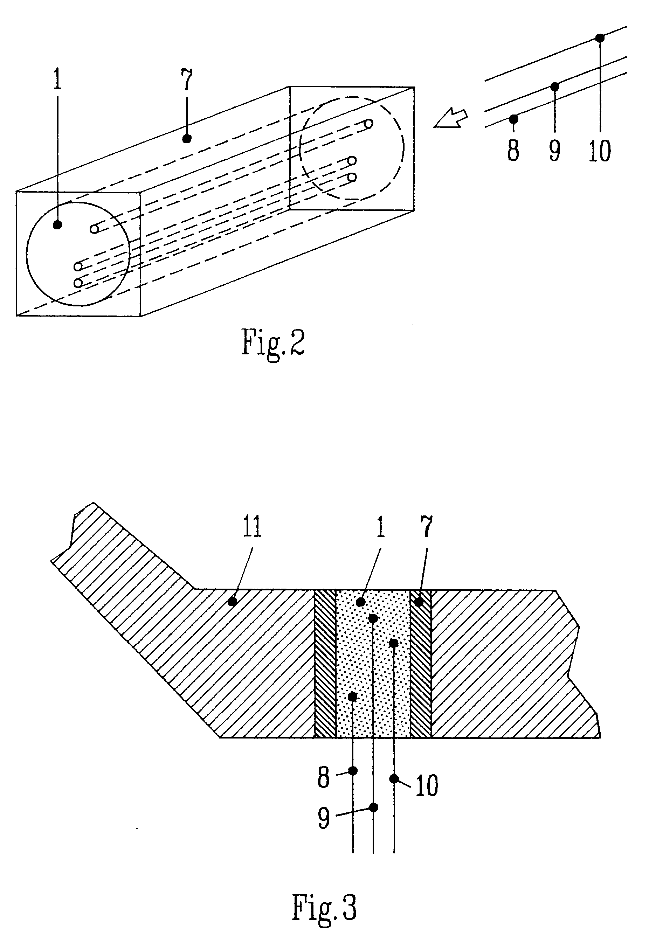

Comme le montre la Fig. 2, le bouchon réfractaire 1 est avantageusement monté dans un bloc de protection et de maintien 7, qui est par exemple réalisé en béton réfractaire vibré. Ce bloc peut en particulier avoir une forme parallèlépipédique, de façon à pouvoir être inséré aisément dans le garnissage réfractaire de la paroi d'un récipient métallurgique. On a également symbolisé ici trois thermocouples 8, 9, 10 qui seront introduits dans trois cavités du bouchon réfractaire 1.

Enfin, la Fig. 3 illustre la position du bouchon réfractaire 1, avec son bloc de protection 7, dans le garnissage d'un fond de convertisseur d'aciérie 11. Les trois thermocouples symbolisés 8, 9, 10 sont situés à des distances prédéterminées de la face avant du bouchon; ils sont d'autre part reliés à un système électronique d'exploitation non représenté.

Le bouchon réfractaire 1 est réalisé ici en nitrure de bore; ce matériau possède une résistance à l'abrasion et à l'attaque par l'acier et la scorie qui assure une distance constante entre la face avant du bouchon et les divers thermocouples. De plus, sa conductibilité thermique élevée permet de limiter le retard avec lequel les variations de température du bain métallique sont perçues par les différents thermocouples; cette propriété est particulièrement intéressante pour suivre l'évolution de la température d'un bain d'acier en cours d'élaboration.

Le dispositif qui vient d'être décrit permet de mesurer indirectement la température d'un bain de métal tel qu'un bain d'acier dans un convertisseur.

Suivant un autre aspect de l'invention, le procédé de mesure continue de la température d'un bain métallique contenu dans un récipient métallurgique, au moyen du dispositif qui vient d'être décrit, consiste à mesurer la température en au moins deux points situés à des profondeurs différentes dans au moins un bouchon réfractaire (1), à enregistrer en continu l'évolution de la température desdits points, par extrapolation à partir desdites températures mesurées et des caractéristiques propres du bouchon (1), à déterminer la température de la face avant (point 0) dudit bouchon (1), qui est égale à la température dudit bain métallique (B).

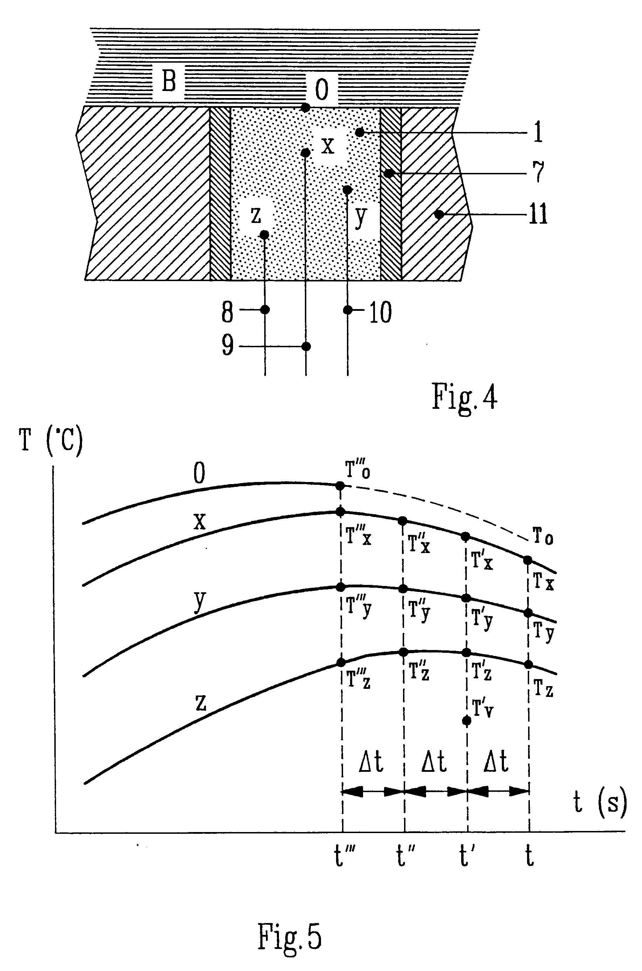

A titre d'exemple, ce procédé est expliqué en détail ci-dessous et illustré par les Fig. 4 et 5.

Dans la Fig. 4, on a représenté schématiquement un bouchon 1 en nitrure de bore, logé dans un bloc de protection 7 et inséré dans une portion du garnissage réfractaire 11 d'un fond de convertisseur en contact avec un bain d'acier B. Soit 0 un point de la face avant du bouchon qui se trouve directement exposée au bain 8. La température Tₒ au point 0 représente donc la température du bain d'acier, supposée homogène. A des profondeurs différentes dans le bouchon 1 sont situés, à titre d'exemple, trois points de mesure X, Y, Z qui, pour simplifier, sont régulièrement répartis suivant la longueur du bouchon. Ils correspondent par exemple respectivement aux thermocouples 9, 10 et 8 de la Fig. 3.

Dans ces conditions, le procédé de l'invention consiste à mesurer ces trois températures T_{X}, T_{Y} et T_{Z} à un instant t quelconque, et à en déduire la température Tₒ du point 0 à ce même instant t.

Si la température Tₒ du point 0 subit une variation ΔT à un instant t, cette variation ne se manifeste pas instantanément aux points X, Y, Z, en raison du temps requis pour permettre la diffusion thermique du point 0 aux autres point X, Y Z. Les distances verticales entre les niveaux des points 0, X, Y, Z étant égales, dans l'exemple représenté, la variation de température ΔT ne se manifeste aux points X, Y, Z qu'aux instants suivants :
- point X :: t + Δt
- point Y :: t + 2 Δt
- point Z :: t + 3 Δt.

Comme on l'a indiqué plus haut, le temps Δt dépend de la distance séparant deux niveaux de mesure voisins et de la diffusivité thermique du matériau réfractaire du bouchon.

La Fig. 5 montre des courbes d'évolution de la température en fonction du temps, jusqu'à l'instant t, pour les trois points de mesure X, Y, Z. La courbe correspondant au point 0, c'est-à-dire à la face avant du bouchon et donc à la température du bain, n'est connue que jusqu'à l'instant t‴ = t - 3 Δt, à la suite des cycles opératoires antérieurs. Sur ces courbes, on a indiqué les températures mesurées aux points X, Y, Z aux instants t; t′ = t - Δt; t˝ = - 2 Δt; t‴ = t - 3 Δt.

La température T_{Z} mesurée au point Z à l'instant t, est le résultat de l'évolution de la température du point Z depuis l'instant t′ = t - Δt jusqu'à l'instant t, sous l'effet de la chaleur reçue du point Y et de la chaleur cédée à un point V plus profond, non représenté, pendant l'intervalle de temps Δt. La température T_{Z} dépend donc des températures T_{Y}′, T_{Z}′, et T_{V}′, ainsi que de la nature du matériau réfractaire du bouchon et de la distance séparant les niveaux des points de mesure.

De même, la température T_{Y}′ dépend de T_{X}˝, de T_{Y}˝ et de T_{Z}˝ et la température T_{X}˝ dépend de Tₒ‴, de T_{X}‴ et de T_{Y}‴.

Connaissant les températures mesurées des points X, Y et Z aux instants t, t′, t˝, t‴ ainsi que le profil thermique suivant la longueur du bouchon 1 au temps t‴, on se donne une température Tₒ‴* à partir de laquelle on peut calculer des températures T_{X}˝*, T_{Y}′* et T_{Z}*. On détermine ensuite les écarts entre ces températures et les températures réelles mesurées T_{X}˝, T_{Y}′ et T_{Z} aux mêmes points, puis on minimise ces écarts afin d'obtenir la température Tₒ‴ effective.

La température Tₒ‴ est donc calculée à l'instant t, c'est-à-dire avec un retard de 3 Δt par rapport à l'instant où elle se produit réellement. Cet intervalle Δt peut être rendu suffisamment petit par un choix judicieux des matériaux employés et par un positionnement approprié des points de mesure.

Toutes ces opérations de calcul sont effectuées par un ordinateur, sous la conduite d'un modèle mathématique approprié, afin de donner quasi instantanément la valeur de la température Tₒ‴ au point 0.

L'invention n'est évidemment pas limitée aux modes de réalisation qui viennent d'être décrits. En particulier, la forme du bouchon 1, la présence et la forme du bloc 7 ainsi que le nombre et la position des thermocouples peuvent être modifiés par l'homme de métier sans sortir du cadre de la présente invention.

## Revendications

1. Dispositif pour la mesure continue de la température d'un bain métallique contenu dans un récipient métallurgique, comprenant dans le garnissage réfractaire de la paroi dudit récipient métallurgique un bouchon (1) en matière réfractaire inséré dans ledit garnissage à un niveau inférieur à la surface supérieure du bain métallique, avec sa face avant affleurant la surface interne dudit garnissage, ainsi que des moyens de mesure de la température logés dans ledit bouchon en matière réfractaire, caractérisé en ce qu'il comporte au moins deux moyens de mesure de la température (8, 9, 10) disposés dans ledit bouchon en matière réfractaire à des profondeurs différentes par rapport à ladite face avant dudit bouchon, en ce que chacun desdits moyens de mesure de la température est logé dans une cavité (2 - 6) ménagée dans ledit bouchon en matière réfractaire et s'étendant depuis la face arrière dudit bouchon jusqu'à la profondeur respective correspondant audit moyen de mesure de la température, et en ce qu'il comprend un système électronique pour déterminer la température de la face avant dudit bouchon en matière réfractaire à partir des températures mesurées par lesdits moyens de mesure de la température à leur profondeur respective dans ledit bouchon.

2. Dispositif suivant la revendication 1, caractérisé en ce que ledit bouchon (1) est constitué, à raison d'au moins 50 %, d'un matériau réfractaire qui présente une diffusivité thermique élevée, choisi parmi le groupe contenant le nitrure de bore, le nitrure de zirconium, le nitrure de silicium, le nitrure d'aluminium, le borure de zirconium et/ou un composé de silicium - aluminium de type Sialon, ou un mélange d'au moins deux de ces substances.

3. Dispositif suivant l'une ou l'autre des revendications 1 et 2, caractérisé en ce que lesdits moyens (8, 9, 10) de mesure de la température sont des thermocouples.

4. Dispositif suivant l'une ou l'autre des revendications 1 et 2, caractérisé en ce que lesdits moyens (8, 9, 10) de mesure de la température sont des pyromètres optiques, éventuellement associés à des fibres optiques.

5. Dispositif suivant l'une ou l'autre des revendications 1 à 4, caractérisé en ce que ledit bouchon réfractaire (1) est placé dans un bloc de protection (7) et en ce qu'il forme avec ledit bloc de protection (7) et lesdits moyens de mesure de la température (8,9,10) une unité de mesure modulaire et interchangeable.

6. Procédé de mesure continue de la température d'un bain métallique contenu dans un récipient métallurgique, au moyen d'un dispositif décrit dans l'une ou l'autre des revendications 1 à 5, caractérisé en ce que l'on mesure la température en au moins deux points situés à des profondeurs différentes dans au moins un bouchon réfractaire (1), en ce que l'on enregistre en continu l'évolution de la température desdits points et en ce que, à partir desdites températures mesurées et des caractéristiques propres du bouchon (1), on détermine la température de la face avant (point 0) dudit bouchon (1), qui est égale à la température dudit bain métallique (B).

## Patentansprüche

1. Vorrichtung zur kontinuierlichen Messung der Temperatur eines in einem metallurgischen Gefäß enthaltenen Metallbades, die in der feuerfesten Auskleidung der Wand des besagten metallurgischen Gefäßes einen Stopfen (1) aus feuerfestem Material enthält, welcher auf einem unterhalb der oberen Fläche des Metallbades gelegenen Pegel in die besagte Auskleidung eingelassen ist, wobei seine vordere Fläche mit der inneren Oberfläche der besagten Auskleidung auf der gleichen Ebene liegt, sowie Mittel zur Messung der Temperatur umfaßt, welche in dem besagten Stopfen aus feuerfestem Material untergebracht sind, dadurch gekennzeichnet, daß die Vorrichtung wenigstens zwei Mittel zur Messung der Temperatur (8, 9, 10) umfaßt, welche in dem besagten Stopfen aus feuerfestem Material in unterschiedlichen Tiefen gegenüber der besagten oberen Fläche des besagten Stopfens angeordnet sind, daß jedes der besagten Mittel zur Messung der Temperatur in einem Hohlraum (2 - 6) untergebracht ist, welcher in dem besagten Stopfen aus feuerfestem Material ausgespart ist und sich ausgehend von der hinteren Fläche des besagten Stopfens bis zu der jeweiligen dem besagten Mittel zur Messung der Temperatur entsprechenden Tiefe erstreckt und daß die Vorrichtung ein elektronisches System zur Bestimmung der Temperatur an der vorderen Fläche des besagten Stopfens aus feuerfestem Material umfaßt, wobei von den Temperaturen die durch die besagten Mittel zur Messung der Temperatur in ihren jeweiligen Tiefen in dem besagten Stopfen gemessen worden sind ausgegangen wird.

2. Vorrichtung gemäß dem Anspruch 1, dadurch gekennzeichnet, daß der besagte Stopfen (1) zu wenigstens 50 % aus einem feuerfesten Material besteht, welches eine hohe Wärmeleitfähigkeit aufweist und welches aus der Gruppe ausgewählt ist die Bornitrid, Zirkoniumnitrid, Siliziumnitrid, Aluminiumnitrid, Zirkoniumborid und/oder eine Silizium-Aluminium-Verbindung der Art des Sialons, oder eine Mischung aus wenigstens zwei dieser Substanzen aufweist.

3. Vorrichtung gemäß dem einem oder dem anderen der Ansprüche 1 und 2, dadurch gekennzeichnet, daß die besagten Mittel zur Messung der Temperatur (8, 9, 10) aus Thermoelementen bestehen.

4. Vorrichtung gemäß dem einem oder dem anderen der Ansprüche 1 und 2, dadurch gekennzeichnet, daß die besagten Mittel zur Messung der Temperatur (8, 9, 10) aus optischen Pyrometern bestehen, welche gegebenenfalls in Verbindung mit optischen Fasern stehen.

5. Vorrichtung gemäß dem einem oder dem anderen der Ansprüche 1 bis 4, dadurch gekennzeichnet, daß der besagte feuerfeste Stopfen (1) in einen Schutzblock (7) gestellt ist und daß er mit dem besagten Schutzblock (7) und mit den besagten Mitteln zur Messung der Temperatur (8, 9, 10) eine modulare und auswechselbare Messeinheit bildet.

6. Verfahren zur kontinuierlichen Messung der Temperatur eines in einem metallurgischen Gefäß enthaltenen Metallbades mittels einer Vorrichtung wie sie in dem einen oder dem anderen der Ansprüche 1 bis 5 beschrieben ist, dadurch gekennzeichnet, daß man die Temperatur an wenigstens zwei Punkten mißt, welche in unterschiedlichen Tiefen in wenigstens einem feuerfesten Stopfen (1) gelegen sind, daß man die Entwicklung der Temperatur an den besagten Punkten kontinuierlich aufzeichnet und daß man, ausgehend von den besagten gemessenen Temperaturen und den dem Stopfen (1) eigenen Merkmalen, die Temperatur an der vorderen Fläche (Punkt 0) des besagten Stopfens (1) bestimmt, welche gleich ist mit der Temperatur des besagten Metallbades (B).

## Claims

1. Device for continuously measuring the temperature of a metal bath contained in a metallurgical vessel, comprising, within the refractory lining of the wall of the said metallurgical vessel, a plug (1) of refractory material, which is inserted in the said lining at a level below the upper surface of the metal bath and with its front face flush with the inner surface of the said lining, as well as means for measuring the temperature, which are arranged in the said plug of refractory material, characterized in that it comprises at least two means for measuring the temperature (8, 9, 10), which are arranged within the said plug of refractory material at different depths with respect to the said front face of the said plug, in that each of the said means for measuring the temperature is located in a cavity (2 - 6) provided in the said plug of refractory material and extending from the backside face of the said plug up to the respective depth corresponding to the said means for measuring the temperature, and in that it comprises an electronic system for determining the temperature of the front face of the said plug of refractory material from the temperatures measured by the said means for measuring the temperature at their respective depths within the said plug.

2. Device according to the claim 1, characterized in that the said plug (1) is constituted by at least 50% of a refractory material which has a high thermal diffusivity and which has been selected out of the group comprising boron nitride, zirconium nitride, silicium nitride, aluminium nitride, zirconium boride and/or a silicium-aluminium compound of the type of Sialon, or a mixture of at least two of these materials.

3. Device according to any of the claims 1 and 2, characterized in that the said means for measuring the temperature (8, 9, 10) are constituted by thermocouples.

4. Device according to any of the claims 1 and 2, characterized in that the said means for measuring the temperature (8, 9, 10) are constituted by radiation pyrometers, possibly associated with optical fibres.

5. Device according to any of the claims 1 to 4, characterized in that the said refractory plug (1) is placed inside a protecting block (7) and in that the said plug is constituting a modular and interchangeable measuring unit together with the said protecting block (7) and the said means for measuring the temperature (8, 9, 10).

6. Process for continuously measuring the temperature of a metal bath contained in a metallurgical vessel, with the help of a device described in any of the claims 1 to 5, characterized in that the temperature is measured at at least two points located at different depths in at least one refractory plug (1), in that the evolution of the temperature of the said points is continuously registered and in that the temperature at the front face (point 0) of the said plug (1) is determined from the said measured temperatures and of the features characterising the plug (1), the said front face temperature being equal to the temperature of the said metal bath (B).
